# EUROPÄISCHE PATENTSCHRIFT

(11) **EP 2 839 237 B1**
(45) Veröffentlichungstag und Bekanntmachung des Hinweises auf die Patenterteilung: **18.05.2016**
(21) Anmeldenummer: 13712171.1
(22) Anmeldetag: 13.03.2013
(51) Int. Cl.: G01B 11/22, B60C 11/24, G01M 17/02

(54) **VERFAHREN ZUR ERMITTLUNG DER PROFILTIEFE EINES FAHRZEUGLUFTREIFENS UND VERWENDUNG EINES MOBILTELEFONS ZUR ERMITTLUNG DER PROFILTIEFE EINES FAHRZEUGLUFTREIFENS**
METHOD FOR DETERMINING THE TREAD DEPTH OF A VEHICLE PNEUMATIC TYRE AND USE OF A MOBILE TELEPHONE FOR DETERMINING THE TREAD DEPTH OF A VEHICLE PNEUMATIC TYRE
PROCÉDÉ DESTINÉ À DÉTERMINER LA PROFONDEUR DE SCULPTURE D'UN PNEU DE VÉHICULE ET UTILISATION D'UN TÉLÉPHONE MOBILE POUR DÉTERMINER LA PROFONDEUR DE SCULPTURE D'UN PNEU DE VÉHICULE

(30) Priorität: 19.04.2012 DE 102012103420
(43) Veröffentlichungstag der Anmeldung: 25.02.2015
(73) Patentinhaber: Continental Reifen Deutschland GmbH, 30165 Hannover (DE)
(72) Erfinder: BOGENSCHÜTZ, Peter, 30900 Wedemark (DE)
(74) Vertreter: Finger, Karsten
(86) Internationale Anmeldenummer: PCT/EP2013/055115
(87) Internationale Veröffentlichungsnummer: WO 2013/156212

(56) Entgegenhaltungen:
- DE-A1- 3 627 833
- US-A- 2 102 784
- US-B2- 6 883 567

## Beschreibung

Die Erfindung betrifft ein Verfahren zur Ermittlung der Profiltiefe des Laufstreifens eines Fahrzeugluftreifens, wobei im Laufstreifen zumindest ein Abriebindikator vorgesehen ist, welcher zumindest einen in radialer Richtung verlaufenden Einschnitt aufweist, dessen an der Laufstreifenaußenseite sichtbare Länge auf definierte Weise mit zunehmendem Abrieb geringer wird und welcher über zumindest zwei Bezugsmarken verfügt, deren gegenseitiger Abstand über den Laufstreifenabrieb konstant und sichtbar bleibt. Die Erfindung betrifft ferner die Verwendung eines Mobiltelefons, insbesondere eines Smartphones, mit Kamera und Bildschirm zur Ermittlung der Profiltiefe eines Laufstreifens eines Fahrzeugluftreifens, wobei im Laufstreifen zumindest ein Abriebindikator vorgesehen ist, welcher zumindest einen in radialer Richtung verlaufenden Einschnitt aufweist, dessen an der Laufstreifenaußenseite sichtbare Länge mit zunehmendem Abrieb auf definierte Weise geringer wird und welcher über mindestens zwei Bezugsmarken verfügt, deren gegenseitiger Abstand über den Laufstreifenabrieb konstant und sichtbar bleibt.

Das Messen und Dokumentieren der aktuellen Profiltiefe von Reifen ist vor allem im Flottenmanagement von Bedeutung, um einen Überblick über die Laufleistung und das Abriebverhalten der an den einzelnen Fahrzeugen eingesetzten Reifen zu erhalten. Das Messen und Dokumentieren der Profiltiefe ist jedoch auch für Privatpersonen wichtig. Neben der Verwendung von Profiltiefen-Messgeräten haben sich im Laufstreifenprofil der Reifen integrierte Indikatoren etabliert, die mit Hilfe von unterschiedlich tiefen Einschnitten im Laufstreifen ein Feststellen des Abriebes des Laufstreifens gestatten. Übliche Abriebindikatoren im Laufstreifen eines Reifens sind auch als Erhebungen am Profilgrund einer Umfangsrille ausgeführt. Erreicht diese Erhebung das Höhenniveau der Laufstreifenoberfläche, ist die gesetzlich vorgeschriebene Mindestprofiltiefe erreicht. Der Fahrzeughalter bzw. Fahrzeugbenützer kann aber die aktuelle Profiltiefe nur grob abschätzen. Darüber hinaus besteht bei diesen Abriebindikatoren das Risiko des Entstehens von Einrissen in den Umfangsrillen.

Aus der US 4,226,274 A ist es bekannt, einen Abriebindikator in der Form eines farblich vom umgebenden Gummi sich abhebenden, über den Laufstreifenumfang verlaufenden schmalen Inserts auszubilden. Dieses Insert hat einen speziellen Querschnitt, sodass mit zunehmendem Abrieb das Insert schmäler wird. Aus der US 6,883,567 B2 ist es bekannt, Einschnitte im Laufstreifen einzuformen, welche mit zunehmendem Abrieb entweder kürzer oder länger werden. Zur Auswertung bzw. Ermittlung des Laufstreifenabriebes wird eine CCD-Kamera verwendet, welche Bilder der Einschnitte erstellt und die Daten an einen Prozessor leitet, welcher durch Auswertung der Einschnittdimensionen und im Vergleich mit den gespeicherten Dimensionen des ursprünglich vorhandenen Einschnittes die aktuelle Profiltiefe errechnet. Der apparative Aufwand dieser Vorrichtung ist hoch und sie kann nur stationär betrieben werden.

Der Erfindung liegt die Aufgabe zugrunde, ein Verfahren der eingangs genannten Art zur Verfügung zu stellen, welches es auf orts-, zeit- und witterungsunabhängige Weise gestattet, ohne großen apparativen Aufwand und auf sehr komfortable Weise die aktuelle Profiltiefe festzustellen.

Gelöst wird die gestellte Aufgabe erfindungsgemäß durch ein Verfahren gemäß Anspruch 1.

Die Erfindung betrifft auch eine Verwendung eines Mobiltelefons gemäß Anspruch 12.

Gemäß der Erfindung gestattet daher eine auf einem Mobiltelefon gespeicherte Anwendungssoftware auf einfache Weise ein Feststellen der aktuellen Profiltiefe eines Fahrzeugluftreifens, unabhängig von Zeit, Ort und Witterung.

*Die Marker werden vor oder nach der Erstellung des Fotos des Abriebindikators mit den Bezugsmarken am Reifen in Deckung gebracht.* Nachdem der gegenseitige Abstand bzw. die Positionierung der Bezugsmarker eine Größe ist, die im Anwendungsprogramm gespeichert ist, wird durch die Positionierung der Marker dem Anwendungsprogramm ein Bezugswert zur Verfügung gestellt, der die Berechnung der Profiltiefe aus der Einschnittlänge am Foto gestattet.

Die Marker sollen am Bildschirm gut sichtbar sein. Es eignen sich daher beispielsweise als Marker Kreise, Striche, + Zeichen oder sonstige Symbole.

Es gibt eine Vielzahl von Möglichkeiten, dem Anwendungsprogramm gut sichtbare Bezugsmarken am Laufstreifen des Reifens zur Verfügung zu stellen. Gemäß einer bevorzugten Ausführungsform der Erfindung sind diese Bezugsmarken im Laufstreifen ausgebildete Löcher, welche sich in einem geringen Abstand von den Enden des/der Einschnitte(s) befinden. Gut sichtbar und gut markierbar sind auch Bezugsmarken, welche kurze, bei neuen Reifen an den Enden des/der Einschnitte(s) positionierte Begrenzungseinschnitte sind. Bei einer Ausführung des Abriebindikators mit zwei miteinander fluchtend angeordneten Einschnitten, deren äußere Enden mit zunehmendem Abrieb ihre Position behalten, können die äußeren Enden dieser Einschnitte als Bezugsmarken verwendet werden.

Besonders vorteilhaft ist die Verwendung eines erfindungsgemäßen Anwendungsprogrammes, wenn die ermittelte Profiltiefe bzw. eine mit dieser korrelierende Größe per Datentransfer, beispielsweise per Internet oder über ein Mobilfunknetz, an eine externe Stelle, insbesondere einen externen Datenspeicher oder einen Server, gesendet werden kann. Vorzugsweise können im Anwendungsprogramm weitere Daten, wie Datum und Uhrzeit der Messung oder fahrzeug- bzw. reifenbezogene Daten und dergleichen abgespeichert werden. Vorteilhafterweise kann vorgesehen sein, dass auch diese Daten, beispielsweise gleichzeitig mit der Profiltiefe, insbesondere vom Anwender entsprechend ausgewählt, an eine externe Stelle übermittelt werden können.

Die Positionierungsmaske kann ferner zumindest eine Messmarkierung anzeigen, welche an einem Einschnittende des fotografierten Einschnittes positioniert wird. Diese Positionierung kann automatisch oder manuell, indem die Messmarkierung über den Bildschirm (Touchscreen) bewegt wird, erfolgen. Die Verwendung einer oder mehrerer Messmarkierungen hat den Vorteil, dass die Länge des Einschnittes oder der Einschnitte des Abriebindikators exakt ermittelt werden kann. Diese Messmarkierung kann als Strich, als Pfeil oder dergleichen ausgeführt sein.

Weitere Merkmale, Vorteile und Einzelheiten der Erfindung werden nun anhand der schematischen Zeichnung, die mehrere Ausführungsbeispiele darstellt, näher beschrieben. Dabei zeigen
Fig. 1 eine Lamelle zum Einformen eines Abriebindikators,
Fig. 2 bis Fig. 4 einen Abriebindikator in unterschiedlichen Abriebsstadien,
Fig. 5 ein weiteres Ausführungsbeispiel einer Lamelle zum Einformen eines Abriebindikators,
Fig. 6 eine Draufsicht auf den Abriebindikator am Laufstreifen,
Fig. 7 eine Draufsicht auf den Abriebindikator nach einem gewissen Laufstreifenabrieb,
Fig. 8 eine weitere Ausführungsform einer Lamelle zum Ausformen eines Abriebindikators im Laufstreifen,
Fig. 9 eine Draufsicht auf den mit der Lamelle aus Fig. 8 hergestellten Abriebindikator bei neuem Laufstreifen,
Fig. 10 eine weitere Ausführungsform einer Lamelle zur Herstellung eines Abriebindikators im Laufstreifen eines Reifens,
Fig. 11 und Fig. 12 Draufsichten auf einen mit einer Lamelle gemäß Fig. 10 hergestellten Abriebindikator in zwei unterschiedlichen Abriebsstadien,
Fig. 13 und Fig. 14 Ansichten der Bildschirmseiten eines Mobiltelefons.

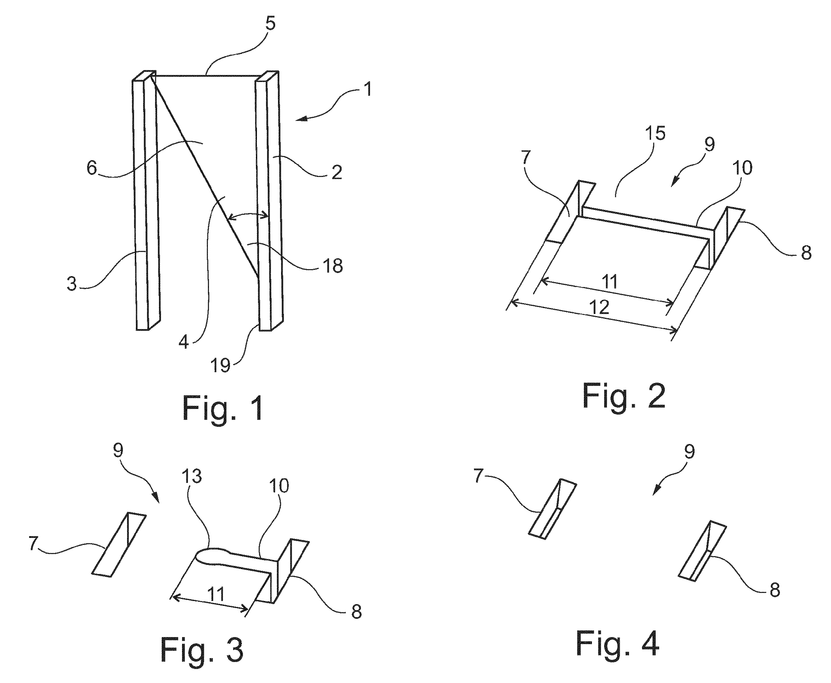

Fig. 1 zeigt eine Lamelle 1 zum Einformen eines Abriebindikators. An ihrer oberen Lamellenseite 5 ist die Lamelle 1 auf nicht gezeigte Weise in eine Vulkanisationsform eingebunden, die das Profil in den unvulkanisierten Laufstreifen des Fahrzeugluftreifens einprägt. Die Lamelle 1 weist einen dreieckigen Lamellenteil 6 auf, welcher einen als Abriebindikator dienenden, geraden Einschnitt im Laufstreifen des Reifens einformt. Weitere Lamellenteile 2 und 3, die in radialer Richtung in den Laufstreifen eindringen, haben die Funktion, Begrenzungseinschnitte 7, 8 (siehe Fig. 2 und Fig. 3) im Laufstreifen einzuformen. Eine Seite des dreieckigen Lamellenteils 6 bildet die Lamellenseite 5, eine weitere verläuft entlang des Lamellenteils 2 und die dritte Seite 4, welche die Hypotenuse des Dreieckes bildet, verbindet das obere Ende des Lamellenteils 3 mit dem unteren Bereich des Lamellenteils 2. Diese verbindende Lamellenseite 4 kann mit einer Rundung versehen sein, welche den Ausformvorgang nach der Vulkanisation des Reifens unterstützt. Die Begrenzungseinschnitte 7 und 8 reichen vorzugsweise bis auf die maximale Profiltiefe, welche üblicherweise der Tiefe der im Reifenprofil ausgebildeten Umfangsrillen entspricht, der vom Lamellenteil 6 gebildete Einschnitt 10 reicht beispielsweise bis zur erlaubten Mindestprofiltiefe.

Fig. 2 zeigt den mit der Lamelle 1 im Laufstreifen gebildeten Abriebindikator 9 in einer Ansicht auf die Außenseite des neuen Laufstreifens, wobei mit 15 die Laufstreifenoberfläche bezeichnet ist. Der Abriebindikator 9 umfasst daher einen linken und rechten Begrenzungseinschnitt 7 und 8, entsprechend den Lamellenteilen 2 und 3 aus Fig. 1, und den zwischen den Begrenzungseinschnitten 7 und 8 verlaufenden Einschnitt 10, dessen Länge 11, wie noch beschrieben wird, ein Maß für den Abrieb und die vorhandene Profiltiefe ist. Die Begrenzungseinschnitte 7 und 8 weisen beispielsweise eine Länge zwischen 3 mm und 12 mm auf. Je nach Dimensionierung der Lamelle 1 kann die Länge 11 des Einschnittes 10 exakt die Profiltiefe des Laufstreifens wiedergeben. Möglich ist auch, dass die Länge 12 als Maß für die Profiltiefe verwendet wird. Bei der in Fig. 1 gezeigten Ausführung der Lamelle 1 beträgt der spitze Winkel 18 etwa 22,5°, sodass die Länge 11 mit dem Faktor 2 zu multiplizieren ist, um die noch verbleibende Profiltiefe zu ermitteln.

Fig. 3 zeigt den Abriebindikator 9 in einem Zustand, bei dem bereits ein bestimmter Laufstreifenabrieb erfolgt ist, sodass die Länge 11 des Einschnittes 10 entsprechend kleiner ist. Der gegenseitige Abstand der Begrenzungseinschnitte 7 und 8 ist gleich geblieben, sodass sich über deren gegenseitiger Abstand und die Länge 11 leicht ermitteln lässt, wie hoch der Laufstreifenabrieb bislang war. Nachdem der Einschnitt 10 in Fig. 3 auf die Hälfte gekürzt ist, wird bei einer Profiltiefe von beispielsweise 20 mm ein Laufstreifenabrieb von etwa 10 mm vorliegen.

Fig. 4 zeigt den Zustand des Abriebindikators 9, bei dem bereits die Mindestprofiltiefe erreicht wurde. Es sind daher nur noch die Begrenzungseinschnitte 7 und 8 zu sehen. Der Fahrzeugbenützer oder der Fahrzeughalter würde somit den Hinweis erhalten, dass die Mindestprofiltiefe erreicht ist und der Fahrzeugluftreifen ausgetauscht werden muss.

Bei einer nicht dargestellten Variante der in Fig. 1 gezeigten Lamelle könnte diese mit ihrem dreieckigen Lamellenteil bis auf die maximale Profiltiefe reichen. Bei Erreichen der Mindestprofiltiefe wäre dann noch ein kurzes Stück des Einschnittes 10 vorhanden, sodass dessen Länge ein Maß für das Erreichen der Mindestprofiltiefe ist.

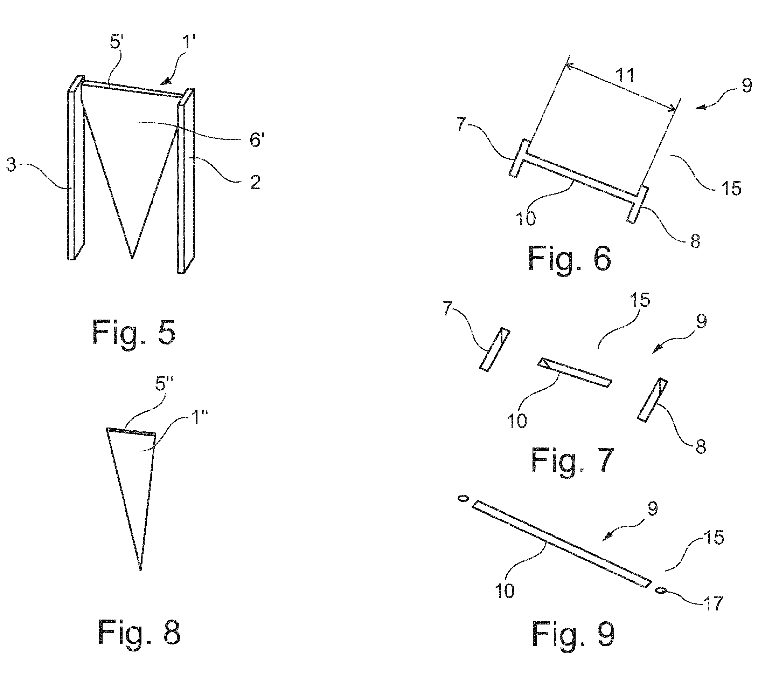

Fig. 5 zeigt ein weiteres Ausführungsbeispiel mit einer dreieckförmigen, hier beispielhaft in Form eines gleichseitigen Dreieckes, ausgeführten Lamelle 1'. Die Hypotenuse des Dreiecks befindet an jener Lamellenseite 5', mit welcher die Lamelle an eine Vulkanisationsform angebunden wird. Die Lamelle 1' weist ferner zwei Lamellenteile 2, 3 auf, die zum Einformen der Begrenzungseinschnitte 7 und 8, analog zur ersten Ausführungsform, dienen. Bei dieser Ausführungsform reichen der dreieckförmige Lamellenteil 6' und die Lamellenteile 2 und 3 bis auf die vorgesehene und somit auch maximale Profiltiefe.

Fig. 6 zeigt den mit der Lamelle 1' im Laufstreifen eines neuen Fahrzeugluftreifens gebildeten Abriebindikator 9, welcher einen linken und einen rechten Begrenzungseinschnitt 7 und 8 und den zwischen den Einschnitten 7, 8 verlaufenden, geraden Einschnitt 10 aufweist. Die Länge 11 des Einschnittes 10 kann direkt oder über einen Umrechnungsfaktor die Profiltiefe des Laufstreifens wiedergeben.

Fig. 7 zeigt den mit der Lamelle 1' gebildeten Abriebindikator 9 in einem Zustand, bei dem bereits ein Laufstreifenabrieb erfolgt ist. Die Länge des Einschnittes 10 hat sich daher entsprechend verkleinert, der Einschnitt 10 weist jeweils einen Abstand zu den Begrenzungseinschnitten 7 und 8 auf. Je nach Dimensionierung des Lamellenteils 6' kann die Länge des Einschnittes 10 direkt die noch verbleibende Profiltiefe anzeigen. Durch die beiden Begrenzungseinschnitte 7 und 8 und deren Abstände zum Einschnitt 10 ist ebenfalls der bereits erfolgte Laufstreifenabrieb ermittelbar.

Fig. 8 zeigt ein weiters Ausführungsbeispiel einer Lamelle 1", die lediglich aus einem dreieckförmigen Teil besteht und auf ihrer Lamellenseite 5" in bekannter und nicht gezeigter Weise in der Vulkanisationsform verankert ist. Es sind keine Lamellenteile zur Ausformung von Begrenzungseinschnitten vorgesehen.

Fig. 9 zeigt den mit der Lamelle 1" im Laufstreifen eines Fahrzeugluftreifens gebildeten Abriebindikator 9 bei neuem Reifen. Der Abriebindikator 9 weist lediglich einen im Laufstreifen gerade verlaufender Einschnitt 10 auf. Die Länge des Einschnittes 10 ändert sich daher auch bei diesem Ausführungsbeispiel mit fortschreitendem Abrieb und ist ein Maß für den Abriebszustand bzw. kann, je nach Dimensionierung der Lamelle 1", direkt die jeweilige Profiltiefe des Laufstreifens wiedergeben oder korreliert entsprechend mit der jeweiligen Profiltiefe. In geringen, gleichen Abständen von den beiden Enden des Einschnittes 10 und in Positionen in Verlängerung des Einschnittes 10 sind im Laufstreifen kleine Löcher 17 ausgebildet, deren Durchmesser beispielsweise zwischen 0,5 mm und 2 mm beträgt. Die Löcher 17 verlaufen im Laufstreifen in radialer Richtung bis auf die maximal vorgesehene Profiltiefe. Analog zu den Begrenzungseinschnitten der vorherigen Ausführungsvarianten kann daher der gegenseitige Abstand der Löcher 17 gemeinsam mit der Länge des Einschnittes 10 ebenfalls zur Ermittlung des bereits erfolgten Abriebes herangezogen werden. Die beiden Löcher 17 können mittels in der Vulkanisationsform verankerten Stiften im Laufstreifen hergestellt werden.

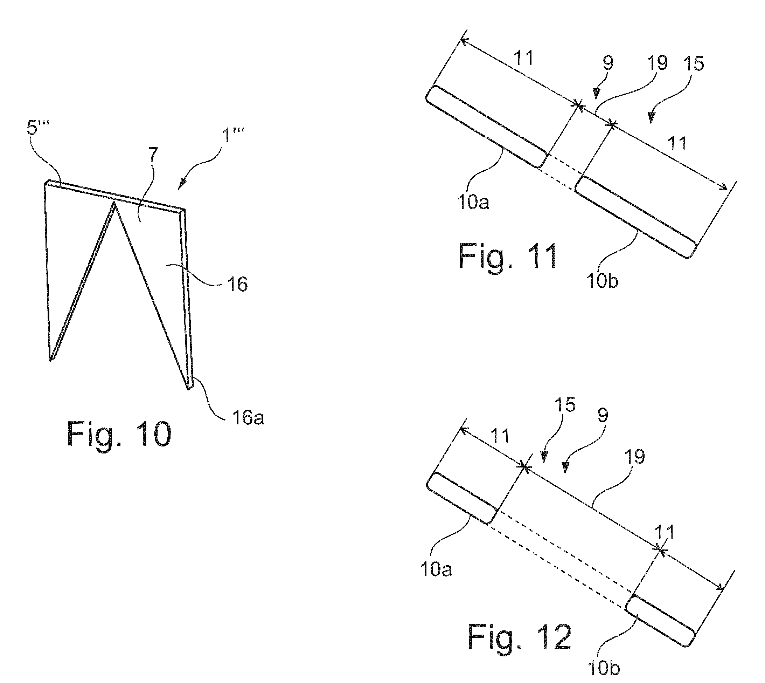

Fig. 10 zeigt ein Ausführungsbeispiel einer Lamelle 1'" aus zwei gleich dimensionierten, dreieckförmigen Lamellenteilen 16. In Seitenansicht betrachtet folgt die Außenkontur der Lamelle 1'" im Wesentlichen einem W. Die beiden Lamellenteile 16 sind wiederum rechtwinkelige Dreiecke, deren rechter Winkel der Laufstreifenaußenseite zugeordnet ist, die Lamellenseite 5'" ist jene, mit welcher die Lamelle 1'" an der nicht dargestellten Vulkanisationsform angebunden ist und die dem Höhenniveau der Laufstreifenoberfläche bei neuem Reifen entspricht. Die Hypotenusen der dreieckigen Lamellenteile 16 bilden gemeinsam eine verkehrt V-förmige Öffnung in der Lamelle 1'", die äußeren Lamellenseiten 16a verlaufen in radialer Richtung. Je nach Dimensionierung der Lamellenteile 16 können ihre Spitzen bis auf die maximal vorgesehene Profiltiefe oder bis auf die gesetzlich vorgesehene Mindestprofiltiefe reichen. Die Spitzen können ferner "abgeschnitten" ausgeführt sein. Möglich ist auch eine Ausführung mit abgerundeten Lamellenseiten. Es ist ferner möglich, an der Lamellenseite 5'" einen Abstand zwischen den beiden dreieckigen Lamellenteilen 16 vorzusehen. Damit entsteht bei neuem Reifen ein sich aus zwei Abschnitten zusammensetzender Einschnitt. Bei einer weiteren, nicht gezeigten Variante können die beiden Lamellenteile 16 derart miteinander verbunden sein, dass im Anfangsstadium des Abriebes des Laufstreifens ein durchgehender Einschnitt konstanter Länge vorerst erhalten bleibt und erst bei einem gewissen Laufstreifenabrieb zwei getrennte Einschnitte im Laufstreifen erkennbar werden.

Fig. 11 zeigt den Abriebindikator 9, hergestellt mit der Lamelle 1'" gemäß Fig. 10, in einem relativ neuen, nur geringfügig abgefahrenen Laufstreifen. Der Abriebindikator 9 setzt sich aus zwei geraden Einschnitten 10a und 10b zusammen, die unter einem geringen Abstand 19 zueinander verlaufen und miteinander fluchten. Die jeweiligen Längen 11 der Einschnitte 10a und 10b können nun direkt die noch verbleibende Profiltiefe im Laufstreifen angeben oder, je nach Dimensionierung der Lamellenteile 16, proportional zur jeweiligen Profiltiefe sein. Ebenso ist der Abstand 19 zwischen den beiden Einschnitten 10a und 10b ein Maß für die noch verbleibende Profiltiefe.

Fig. 12 zeigt den Abriebindikator 9, hergestellt mit der Lamelle 1'", bei einem bereits weiter abgefahrenen Reifenprofil, wobei das Bezugzeichen 15 wiederum die Laufstreifenoberfläche wiedergibt. Die Länge 11 der Einschnitte 10a und 10b hat sich deutlich verringert. Die Länge 19 zwischen den beiden Einschnitten 10a und 10b ist größer geworden und zeigt das Ausmaß des Abriebes an und ist somit, wie die Längen 11, ein Maß für die noch vorhandene Profiltiefe.

Die Einschnitte 10, 10a und 10b können die für Einschnitte im Laufstreifen übliche Breite von 0,4 mm bis etwa 1 mm aufweisen.

Gemäß der Erfindung erfolgt eine besonders komfortable und genaue Ermittlung des Abriebszustandes des Laufstreifenprofils, welches mit einem oder mehreren der beschriebenen Abriebindikatoren versehen ist, unter Verwendung eines Mobiltelefons, insbesondere eines Smartphones, mittels eines speziellen Anwendungsprogrammes, eines Apps. Das Anwendungsprogramm an sich ist dabei nicht Gegenstand dieser Erfindung.

Wie bekannt, ist ein Smartphone ein Mobiltelefon, welches bezüglich Konstruktion und Bedienung nicht nur für das Telefonieren optimiert ist, sondern eine breite Palette von Anwendungen ermöglicht. Smartphones verfügen über ein Betriebssystem, welches es dem Benutzer ermöglicht, Programme bzw. Anwendungssoftware zu installieren, die entweder über einen PC heruntergeladen oder über entsprechende Software automatisch oder manuell oder auch direkt über das Mobilfunknetz oder die mobile Internetverbindung auf das Smartphone geladen und installiert werden. Anwendungsprogramme (Apps) werden auf einen internen Speicher oder einer eingesteckten Speicherkarte abgespeichert. Ein im Rahmen der Erfindung geeignetes Mobiltelefon verfügt ferner über eine eingebaute Kamera.

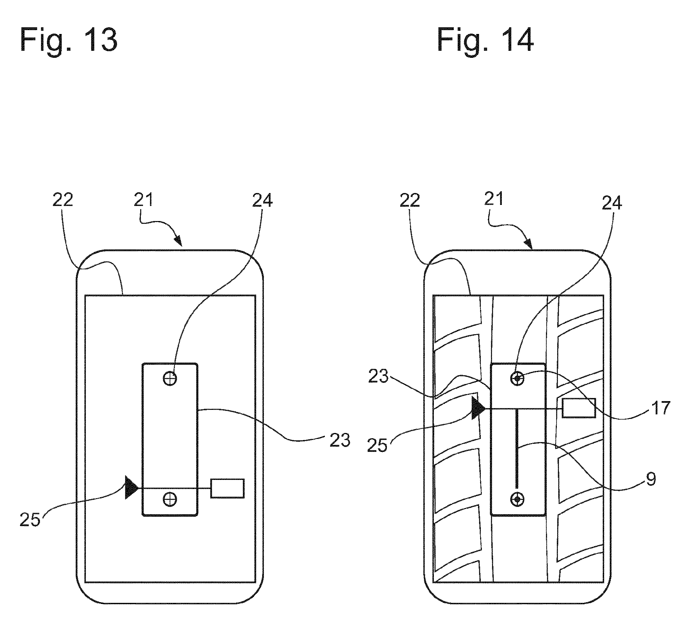

Fig. 13 und Fig. 14 zeigen Ansichten eines Smartphones 21, wobei die Seite mit dem Bildschirm 22 dargestellt ist. Das Smartphone 21 kann eines der üblichen, am Markt erhältlichen Smartphones sein, welches die Installation von Anwendungsprogrammen (Apps) gestattet. Der Bildschirm 22 kann einer der üblichen Touchscreens sein.

Das zur Ermittlung der aktuellen Profiltiefe eines Fahrzeugluftreifens unter Verwendung eines Abriebindikators 9 vorgesehene Anwendungsprogramm wird auf die übliche Weise, beispielsweise über ein Icon, gestartet. Mit dem Start wird vorzugsweise gleich die Kamerafunktion aktiviert und es wird am Bildschirm 22 eine Positionierungsmaske 23 angezeigt. Um die Profiltiefe zu ermitteln, ist das Fahrzeug bzw. ist der zu prüfende Reifen derart zu positionieren, dass der Abriebindikator 9 sichtbar ist und das Smartphone 21 oberhalb des Abriebindikators 9 an diesen herangeführt werden kann. Um die Positionierung des Reifens zu erleichtern, können am Reifen in den äußeren Schulterbereichen beispielsweise farblich oder sonst wie auffallende bzw. gut sichtbare Markierungen angebracht sein, die sich seitlich der Position des Abriebindikators befinden.

Die Positionierungsmaske 23 zeigt oder besteht aus mindestens zwei Marker(n) 24, beispielsweise in der Form zweier Kreise, wie es in Fig. 13 gezeigt ist, oder in der Form eines "+" oder eines sonstigen Zeichens. Bei einer Ausführung der Abriebindikatoren 9 gemäß Fig. 9 mit zwei Löchern 17 und einem geraden Einschnitt 10 - wie es auch Fig. 14 zeigt - sind die Marker 24 vorzugsweise zwei kleine Kreise. Das Smartphone 21 wird oberhalb des Laufstreifens positioniert, sodass die Kamera den Abriebindikator 9 erfasst, welcher am Bildschirm 22 sichtbar wird. Bei einer möglichen Ausführung des Anwendungsprogrammes ist vorgesehen, dass das Smartphone 21 bewegt wird, bis die beiden Marker 24, hier die Kreise, in Deckung mit den beiden Löchern 17 sind. Das Anwendungsprogramm kann dann automatisch eine Aufnahme über die Kamera erstellen oder es kann die Kamera von Hand aus ausgelöst werden. Bei einer anderen Variante wird ein Foto des Abriebindikators erstellt und erst anschließend werden die Marker in Deckung mit den Löchern 17 der Aufnahme gebracht, insbesondere durch entsprechendes Vergrößern oder Verkleinern des Fotos mittels Fingerbewegung über den Bildschirm 22 bzw. Touchscreen. Fig. 14 zeigt die Aufnahme am Bildschirm 22 mit positionierten Markern 24. Das Anwendungsprogramm kann derart programmiert sein, dass es aus der Länge des Einschnittes 10 und den abgespeicherten Einschnittdimensionen unmittelbar die Profiltiefe errechnet. Es kann auch zumindest eine Messmarkierung 25, beispielsweise ein Strich mit Pfeilsymbol, am Bildschirm 22 angezeigt werden, welche an das eine Ende des Einschnittes 10 in der Aufnahme geschoben wird. Dieser Vorgang kann vom Anwendungsprogramm ebenfalls automatisch vorgenommen werden, alternativ manuell durch Bewegen der Messmarkierung 25 über den Touchscreen. Es können auch mehrere Markierungen 25 angezeigt werden, sodass je nach Ausführung des/der Einschnitte(s) dessen/deren Ende(n) von je einer Messmarkierung erfasst werden können. Alternativ kann eine Messmarkierung 25 in verschiedene Positionen bewegt und diese gespeichert werden. Die mit der/den Position(en) der Messmarkierung(en) 25 korrelierende tatsächliche Profiltiefe wird vom Anwendungsprogramm errechnet und am Bildschirm 22 direkt angezeigt. Zusätzlich oder alternativ kann die bis zur Mindestprofiltiefe vorhandene Profiltiefe angezeigt werden.

Das Messergebnis-, die Profiltiefe-, wird mit dem Datum der Aufnahme in einem am Mobiltelefon vorhandenen Speicher abgespeichert. Es kann vorgesehen sein, die Daten per Datentransfer, beispielsweise per Internet oder über ein Mobilfunknetz, an einen externen Datenspeicher bzw. Server zu senden. Letztere Maßnahme ist insbesondere beim Einsatz des Anwendungsprogrammes auf Mobiltelefonen von Benützern von Fahrzeugen einer Fahrzeugflotte im Flottenmanagement vorteilhaft und nützlich.

Werden die Abriebindikatoren 9 wie in Fig. 1 bis 7 dargestellt ausgeführt, so können die Marker 24 vorzugsweise als kurze Striche ausgeführt sein, die in Deckung mit den Begrenzungseinschnitten 7 und 8 zu bringen sind. Bei einer Ausführung der Abriebindikatoren 9 gemäß Fig. 10 bis 12 können die Marker 24 ebenfalls kurze Striche sein, die in Deckung mit jeweils den äußeren Enden der zwei Einschnitte zu bringen sind. Je nach Ausführung des Abriebindikators 9 können auch mehr als zwei Marker 24 vorgesehen werden.

Das Anwendungsprogramm ist selbstverständlich derart programmiert, dass in Abhängigkeit von der Dimensionierung der Einschnitte, der jeweiligen Mindestprofiltiefe oder der maximalen Profiltiefe des Reifens bzw. Reifentyps die entsprechende Berechnung der aktuellen Profiltiefe oder der noch nutzbaren bis zum Erreichen der Mindestprofiltiefe vorhandenen Profiltiefe erfolgt. Der gegenseitige Abstand der Löcher 17, der Begrenzungseinschnitte 7, 8 und dergleichen bleibt über den Laufstreifenabrieb konstant, sodass die Löcher 17, die Einschnitte 7, 8 und dergleichen Bezugsmarken für die Berechnung der aktuellen Profiltiefe sind, welche darüber hinaus auf Basis der abgespeicherten tatsächlichen Dimensionen des zumindest einen Einschnittes erfolgt.

Das Anwendungsprogramm kann über weitere Funktionen verfügen, insbesondere kann vorgesehen sein, fahrzeugbezogene Daten, wie den Kilometerstand, Reifendaten, wie die Reifenposition des gemessenen Reifen am Fahrzeug, seine Bezeichnung und dergleichen einzugeben und abzuspeichern. Auch diese Daten können per Datentransfer an eine externe Stelle übermittelt werden.

Die Erfindung ist besonders vorteilhaft einsetzbar, wenn im Laufstreifen des Reifens je ein Abriebindikator auf zwei gegenüberliegenden schulterseitigen Profilelementen, beispielsweise Schulterblöcken, angebracht ist, um einen Vergleich des Abriebs innen/außen zu ermöglichen. Solche Abriebindikatoren werden als Visual Alignment Indicators (VAI) bezeichnet. Der Hintergrund ist, sicherzustellen, dass falsche Fahrwerkseinstellungen am Fahrzeug schnell erkannt werden können. Der Einsatz von Indikatoren, die mit einem Smartphone, wie beschrieben, vermessen werden können, gestaltet die Messungen genauer und ermöglicht einen einfachen Vergleich. Die Anwendungssoftware kann über einen eigenen, auswählbaren Modus für solche Messungen und deren Auswertung verfügen.

### Bezugsziffernliste

1, 1', 1", 1'" ... Lamelle
2 ....................... Lamellenteil
3 ....................... Lamellenteil
4 ....................... Lamellenseite
5, 5', 5 ", 5'" ... Lamellenseite
6, 6' .................. Lamellenteil
7 ....................... Begrenzungseinschnitt
8 ....................... Begrenzungseinschnitt
9 ....................... Abriebindikator
10..................... Einschnitt
10a ................... Einschnitt
10b ................... Einschnitt
11 ..................... Länge
12 ..................... Länge
15 ..................... Oberfläche des Laufstreifens
16 ..................... Lamellenteil
16a ................... Lamellenseite
17 ..................... Loch
18 ..................... Winkel
19..................... Abstand
21..................... Smartphone
22..................... Bildschirm
23 ..................... Positionierungsmaske
24..................... Marker
25 ..................... Messmarkierung

## Patentansprüche

1. Verfahren zur Ermittlung der Profiltiefe des Laufstreifens eines Fahrzeugluftreifens, wobei im Laufstreifen zumindest ein Abriebindikator (9) vorgesehen ist, welcher zumindest einen in radialer Richtung verlaufenden Einschnitt (10, 10a, 10b) aufweist, dessen an der Laufstreifenaußenseite sichtbare Länge mit zunehmendem Abrieb auf definierte Weise geringer wird und welcher über mindestens zwei Bezugsmarken verfügt, deren gegenseitiger Abstand über den Laufstreifenabrieb konstant und sichtbar bleibt,
**dadurch gekennzeichnet,**
**dass** mittels eines Anwendungsprogrammes eines eine Kamera und einen Bildschirm (22) aufweisenden Mobiltelefons, insbesondere eines Smartphones, ein Foto des Einschnittes (10, 10a, 10b) und der Bezugsmarken erstellt wird, wobei das Anwendungsprogramm *am Bildschirm (22) eine Positionierungsmaske (23) zur Verfügung stellt, welche zumindest zwei Marker (24) aufweist, die mit den Bezugsmarken in Deckung gebracht werden, und* aus dem definierten Abstand der Bezugsmarken, den gespeicherten Daten der Einschnittcharakteristik und der Länge des Einschnittes (10) die aktuelle Profiltiefe errechnet und diese und/oder die Restprofiltiefe bis zum Erreichen der Mindestprofiltiefe am Bildschirm (22) anzeigt.

2. Verfahren nach Anspruch 1, **dadurch gekennzeichnet, *dass*** *die Marker (24) vor oder nach der Erstellung des Fotos des Abriebsindikators (9) mit den Bezugsmarken am Reifen in Deckung gebracht werden.*

3. Verfahren nach Anspruch 2, **dadurch gekennzeichnet, dass** die Marker (24) Kreise, Striche, + Zeichen oder sonstige Symbole sind.

4. Verfahren nach einem der Ansprüche 1 bis 3, **dadurch gekennzeichnet, dass** die Bezugsmarken am Laufstreifen im Laufstreifen ausgebildete Löcher (17) sind, welche sich in einem geringen Abstand von den Enden des Einschnittes (10) befinden.

5. Verfahren nach einem der Ansprüche 1 bis 3, **dadurch gekennzeichnet, dass** die Bezugsmarken am Laufstreifen kurze, bei neuem Reifen an den Enden des/der Einschnitte(s) (10) positionierte Begrenzungseinschnitte (7, 8) sind.

6. Verfahren nach einem der Ansprüche 1 bis 3, **dadurch gekennzeichnet, dass** die Bezugsmarken am Laufstreifen die äußeren Enden von im Laufstreifen ausgebildeten, miteinander fluchtend angeordneten Einschnitten (10a, 10b) sind.

7. Verfahren nach einem der Ansprüche 1 bis 6, **dadurch gekennzeichnet, dass** am Bildschirm (22) zumindest eine Messmarkierung (25) angezeigt wird, welche an einem Einschnittende des fotografierten Einschnittes (10, 10a, 10b) positioniert wird.

8. Verfahren nach Anspruch 7, **dadurch gekennzeichnet, dass** die zumindest eine Messmarkierung (25) als Strich, als Pfeil oder dergleichen ausgeführt ist und manuell oder automatisch in die Messposition gebracht wird.

9. Verfahren nach einem der Ansprüche 1 bis 8, **dadurch gekennzeichnet, dass** die vom Anwendungsprogramm ermittelte Profiltiefe per Datentransfer, beispielsweise per Internet oder über ein Mobilfunknetz, an eine externe Stelle, insbesondere einen Datenspeicher oder Server, gesendet wird.

10. Verfahren nach einem der Ansprüche 1 bis 9, **dadurch gekennzeichnet, dass** das Anwendungsprogramm die Speicherung weiterer Daten, wie Datum und Uhrzeit der Messung oder von fahrzeug- oder reifenbezogenen Daten und dergleichen gestattet.

11. Verfahren nach einem der Ansprüche 1 bis 10, **dadurch gekennzeichnet, dass** die Kamera in der Messposition der Marker (24) manuell oder automatisch ausgelöst wird.

12. Verwendung eines Mobiltelefons (21), insbesondere eines Smartphones, mit Kamera und Bildschirm (22) zur Ermittlung der Profiltiefe eines Laufstreifens eines Fahrzeugluftreifens, wobei im Laufstreifen zumindest ein Abriebindikator (9) vorgesehen ist, welcher zumindest einen in radialer Richtung verlaufenden Einschnitt (10, 10a, 10b) aufweist, dessen an der Laufstreifenaußenseite sichtbare Länge mit zunehmendem Abrieb auf definierte Weise geringer wird und welcher über mindestens zwei Bezugsmarken verfügt, deren gegenseitiger Abstand über den Laufstreifenabrieb konstant und sichtbar bleibt,
**dadurch gekennzeichnet,**
**dass** am Mobiltelefon (21) ein Anwendungsprogramm installiert ist, welches am Bildschirm (22) eine Positionierungsmaske (23) zur Verfügung stellt, welche zumindest zwei Marker (24) aufweist, die mit den Bezugsmarken des Abriebindikators (9) in Deckung zu bringen sind, mittels welchem ferner ein Foto des Einschnittes (10, 10a, 10b) mit positionierten Markern (24) erstellt wird, und welches aus der Länge des fotografierten Einschnittes (10, 10a, 10b), den gespeicherten Daten der Einschnittcharakteristik und dem tatsächlichen Abstand der Bezugsmarken die aktuelle Profiltiefe errechnet und diese und/oder die Restprofiltiefe bis zum Erreichen der Mindestprofiltiefe anzeigt.

13. Verwendung nach Anspruch 12, **dadurch gekennzeichnet, dass** die Positionierungsmaske (23) zumindest eine Messmarkierung (25) aufweist, welche mit einem Ende des/der Einschnitte(s) (10, 10a, 10b) manuell oder automatisch in Deckung gebracht wird.

14. Verwendung nach Anspruch 12, **dadurch gekennzeichnet, dass** die Marker (24) Kreise, Striche oder sonstige Symbole sind.

15. Verwendung nach Anspruch 12, **dadurch gekennzeichnet, dass** das Anwendungsprogramm die Speicherung weiterer Daten, wie Datum und Uhrzeit der Messung oder von fahrzeug- oder reifenbezogenen Daten gestattet.

16. Verwendung nach Anspruch 12 oder 15, **dadurch gekennzeichnet, dass** das Anwendungsprogramm eine Übermittlung der errechneten Profiltiefe/Restprofiltiefe und/oder der weiteren Daten an eine externe Stelle, einen Server oder dergleichen, insbesondere per Internet oder per Mobilfunknetz, gestattet.

17. Verwendung nach einem der Ansprüche 12 bis 16 zur Messung von Visual Alignment Indicators am Laufstreifen eines Reifens, insbesondere mittels eines auswählbaren Modus des Anwendungsprogrammes.

## Claims

1. Method for determining the profile depth of the tread of a pneumatic vehicle tire, wherein at least one wear indicator (9) is provided in the tread, said wear indicator having at least one incision (10, 10a, 10b) which runs in the radial direction, the length of said incision which is visible on the outside of the tread becoming shorter in a defined manner as wear increases, and said wear indicator having at least two reference marks, the mutual distance between said two reference marks remaining constant and visible over the tread wear,
**characterized**
**in that** a photograph of the incision (10, 10a, 10b) and of the reference marks is created by means of an application program of a mobile telephone, in particular of a smartphone, which has a camera and a screen (22), wherein the application program provides a positioning mask (23) on the screen (22), said positioning mask having at least two markers (24) which are brought into line with the reference marks, and uses the defined distance between the reference marks, the stored data of the incision characteristic and the length of the incision (10) to calculate the current profile depth and displays on the screen (22) said current profile depth and/or the profile depth remaining until the minimum profile depth is reached.

2. Method according to Claim 1, **characterized in that** the markers (24) are brought into line with the reference marks on the tire before or after the photograph of the wear indicator (9) is created.

3. Method according to Claim 2, **characterized in that** the markers (24) are circles, dashes, + signs or other symbols.

4. Method according to one of Claims 1 to 3,
**characterized in that** the reference marks on the tread are holes (17) which are formed in the tread and which are located at a short distance from the ends of the incision (10).

5. Method according to one of Claims 1 to 3,
**characterized in that** the reference marks on the tread are short boundary incisions (7, 8) which are positioned at the ends of the incision/incisions (10) in a new tire.

6. Method according to one of Claims 1 to 3,
**characterized in that** the reference marks on the tread are the outer ends of incisions (10a, 10b) which are formed in the tread and are arranged in alignment with one another.

7. Method according to one of Claims 1 to 6,
**characterized in that** at least one measurement marking (25) is displayed on the screen (22), said measurement marking being positioned at an incision end of the photographed incision (10, 10a, 10b).

8. Method according to Claim 7, **characterized in that** the at least one measurement marking (25) is designed as a dash, as an arrow or the like, and is moved to the measurement position manually or automatically.

9. Method according to one of Claims 1 to 8,
**characterized in that** the profile depth which is determined by the application program is sent by data transfer, for example by Internet or by means of a mobile radio network, to an external location, in particular to a data memory or server.

10. Method according to one of Claims 1 to 9,
**characterized in that** the application program allows further data, such as the date and time of the measurement, or vehicle- or tire-related data and the like to be stored.

11. Method according to one of Claims 1 to 10,
**characterized in that** the camera is tripped manually or automatically in the measurement position of the markers (24).

12. Use of a mobile telephone (21), in particular of a smartphone, having a camera and a screen (22), for determining the profile depth of a tread of a pneumatic vehicle tire, wherein at least one wear indicator (9) is provided in the tread, said wear indicator having at least one incision (10, 10a, 10b) which runs in the radial direction, the length of said incision which is visible on the outside of the tread becoming shorter in a defined manner as wear increases, and said wear indicator having at least two reference marks, the mutual distance between said two reference marks remaining constant and visible over the tread wear,
**characterized**
**in that** an application program is installed on the mobile telephone (21), said application program providing a positioning mask (23) on the screen (22), said positioning mask having at least two markers (24) which are intended to be brought into line with the reference marks of the wear indicator (9), by means of which application program a photograph of the incision (10, 10a, 10b) with positioned markers (24) is further created, and which application program uses the length of the photographed incision (10, 10a, 10b), the stored data relating to the incision characteristics, and the actual distance between the reference marks to calculate the current profile depth and displays said current profile depth and/or the profile depth remaining until the minimum profile depth is reached.

13. Use according to Claim 12, **characterized in that** the positioning mask (23) has at least one measurement marking (25) which is brought into line with one end of the incision/incisions (10, 10a, 10b) in a manual or automatic manner.

14. Use according to Claim 12, **characterized in that** the markers (24) are circles, dashes or other symbols.

15. Use according to Claim 12, **characterized in that** the application program allows further data, such as the date and time of the measurement, or vehicle- or tire-related data to be stored.

16. Use according to Claim 12 or 15, **characterized in that** the application program allows the calculated profile depth/remaining profile depth and/or the further data to be transmitted to an external location, to a server or the like, in particular by Internet or by a mobile radio system.

17. Use according to one of Claims 12 to 16 for measuring visual alignment indicators on the tread of a tire, in particular by means of a selectable mode of the application program.

## Revendications

1. Procédé de détermination de la profondeur de sculpture de la bande de roulement d'un pneu de véhicule, au moins un indicateur d'usure (9) étant prévu dans la bande de roulement, lequel possède au moins une entaille (10, 10a, 10b) qui s'étend dans le sens radial, dont la longueur visible du côté extérieur de la bande de roulement se réduit de manière définie à mesure que l'usure augmente et qui dispose d'au moins deux marques de référence dont l'écart mutuel reste constant et visible au cours de l'usure de la bande de roulement,
**caractérisé en ce**
**qu'**une photo de l'entaille (10, 10a, 10b) et des marques de référence est créée au moyen d'un programme d'application d'un téléphone mobile, notamment un Smartphone, possédant une caméra et un écran (22), le programme d'application produisant sur l'écran (22) un masque de positionnement (23) qui possède au moins deux marqueurs (24), lesquels sont amenés en coïncidence avec les marques de référence, et calculant la profondeur de sculpture actuelle à partir de l'écart défini des marques de référence, des données mémorisées de la caractéristique de l'entaille et de la longueur de l'entaille (10), puis affichant celle-ci et/ou la profondeur de sculpture restante avant d'atteindre la profondeur de sculpture minimale sur l'écran (22).

2. Procédé selon la revendication 1, **caractérisé en ce que** les marqueurs (24) sont amenés en coïncidence avec les marques de référence sur le pneu avant ou après la création de la photo de l'indicateur d'usure (9).

3. Procédé selon la revendication 2, **caractérisé en ce que** les marqueurs (24) sont des cercles, des traits, des signes + ou d'autres symboles.

4. Procédé selon l'une des revendications 1 à 3,
**caractérisé en ce que** les marques de référence sur la bande de roulement sont des trous (17) formés dans la bande de roulement qui se trouvent à une faible distance des extrémités de l'entaille (10).

5. Procédé selon l'une des revendications 1 à 3,
**caractérisé en ce que** les marques de référence sur la bande de roulement sont de courtes entailles de délimitation (7, 8) positionnées aux extrémités de la / des entaille(s) (10) sur les pneus neufs.

6. Procédé selon l'une des revendications 1 à 3,
**caractérisé en ce que** les marques de référence sur la bande de roulement sont les extrémités extérieures d'entailles (10a, 10b) disposées alignées les unes sur les autres, formées dans la bande de roulement.

7. Procédé selon l'une des revendications 1 à 6,
**caractérisé en ce qu'**au moins un marquage de mesure (25) est affiché sur l'écran (22), lequel est positionné à une extrémité de l'entaille (10, 10a, 10b) photographiée.

8. Procédé selon la revendication 7, **caractérisé en ce que** l'au moins un marquage de mesure (25) est réalisé sous la forme d'un trait, d'une flèche ou similaire et il est amené manuellement ou automatiquement en position de mesure.

9. Procédé selon l'une des revendications 1 à 8,
**caractérisé en ce que** la profondeur de sculpture déterminée par le programme d'application est envoyée à un poste externe, notamment une mémoire de données ou un serveur, par transfert de données, par exemple par Internet ou par le biais d'un réseau de radiocommunication mobile.

10. Procédé selon l'une des revendications 1 à 9,
**caractérisé en ce que** le programme d'application autorise la mise en mémoire de données supplémentaires, comme la date et l'heure de la mesure ou des données en rapport avec le véhicule ou le pneu et similaires.

11. Procédé selon l'une des revendications 1 à 10,
**caractérisé en ce que** la caméra est déclenchée manuellement ou automatiquement dans la position de mesure des marqueurs (24).

12. Utilisation d'un téléphone mobile (21), notamment d'un Smartphone, comprenant une caméra et un écran (22) pour la détermination de la profondeur de sculpture d'une bande de roulement d'un pneu de véhicule, au moins un indicateur d'usure (9) étant prévu dans la bande de roulement, lequel possède au moins une entaille (10, 10a, 10b) qui s'étend dans le sens radial, dont la longueur visible du côté extérieur de la bande de roulement se réduit de manière définie à mesure que l'usure augmente et qui dispose d'au moins deux marques de référence dont l'écart mutuel reste constant et visible au cours de l'usure de la bande de roulement,
**caractérisée en ce**
**qu'**un programme d'application est installé sur le téléphone mobile (21), lequel produit sur l'écran (22) un masque de positionnement (23) qui possède au moins deux marqueurs (24), lesquels doivent être amenés en coïncidence avec les marques de référence de l'indicateur d'usure (9), au moyen duquel est en outre créée une photo de l'entaille (10, 10a, 10b) avec les marqueurs (24) positionnés, et lequel calcule la profondeur de sculpture actuelle à partir de la longueur de l'entaille (10, 10a, 10b) photographiée, des données mémorisées de la caractéristique de l'entaille et de l'écart défini des marques de référence, puis affiche celle-ci et/ou la profondeur de sculpture restante avant d'atteindre la profondeur de sculpture minimale.

13. Utilisation selon la revendication 12,
**caractérisée en ce que** le masque de positionnement (23) possède au moins un marquage de mesure (25) qui est amené manuellement ou automatiquement en coïncidence avec une extrémité de la / des entaille(s) (10, 10a, 10b).

14. Utilisation selon la revendication 12,
**caractérisée en ce que** les marqueurs (24) sont des cercles, des traits ou d'autres symboles.

15. Utilisation selon la revendication 12,
**caractérisée en ce que** le programme d'application autorise la mise en mémoire de données supplémentaires, comme la date et l'heure de la mesure ou des données en rapport avec le véhicule ou le pneu.

16. Utilisation selon la revendication 12 ou 15,
**caractérisée en ce que** le programme d'application autorise une communication de la profondeur de sculpture / profondeur de sculpture restante calculée et/ou des données supplémentaires à un poste externe, un serveur ou similaire, notamment par Internet ou par le biais d'un réseau de radiocommunication mobile.

17. Utilisation selon l'une des revendications 12 à 16 pour la mesure d'indicateurs d'alignement visuels sur la bande de roulement d'un pneu, notamment à l'aide d'un mode sélectionné du programme d'application.
